(19) Europäisches Patentamt
European Patent Office
Office européen des brevets

(11) **EP 2 652 068 B1**

(12) **FASCICULE DE BREVET EUROPEEN**

(45) Date de publication et mention de la délivrance du brevet:
**26.02.2020 Bulletin 2020/09**

(21) Numéro de dépôt: **11807708.0**

(22) Date de dépôt: **24.11.2011**

(51) Int Cl.:
***C09K 8/58*** *(2006.01)*

(86) Numéro de dépôt international:
**PCT/FR2011/000621**

(87) Numéro de publication internationale:
**WO 2012/080590 (21.06.2012 Gazette 2012/25)**

(54) **METHODE DE RECUPERATION ASSISTEE D'HYDROCARBURES COMPRENANT L'OPTIMISATION DE L'INJECTION D'UNE SOLUTION AQUEUSE DE CONDITIONNEMENT**

VERFAHREN ZUR UNTERSTÜTZTEN GEWINNUNG VON KOHLENWASSERSTOFFEN, EINSCHLIESSLICH DER OPTIMIERUNG DER INJEKTION EINER WÄSSRIGEN KONDITIONIERUNGSLÖSUNG

METHOD FOR THE ASSISTED RECOVERY OF HYDROCARBONS, INCLUDING OPTIMIZING THE INJECTION OF AN AQUEOUS CONDITIONING SOLUTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2010 FR 1004889**

(43) Date de publication de la demande:
**23.10.2013 Bulletin 2013/43**

(73) Titulaire: **IFP Energies nouvelles**
**92500 Rueil-Malmaison (FR)**

(72) Inventeurs:
• **BOURBIAUX, Bernard**
  **F-92500 Rueil-Malmaison (FR)**
• **NGUYEN, Quang, Long**
  **F-92800 Puteaux (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A1- 2 072 752        WO-A2-01/27750**
**WO-A2-2011/064542   US-A- 3 871 452**
**US-A- 3 977 470          US-A1- 2005 199 395**
**US-A1- 2008 091 396**

• **B. BAZIN, J. LABRID, INST. FRANCAIS DU PETROLE: "Ion Exchange and Dissolution/ Precipitation Modeling: Application to the Injection of Aqueous Fluids Into a Reservoir Sandstone", SPE RESERVOIR ENGINEERING, vol. 6, no. 2, mai 1991 (1991-05), pages 233-238, XP002640499, Society of Petroleum Engineers DOI: 10.2118/18464-PA cité dans la demande**

**EP 2 652 068 B1**

Printed by Jouve, 75001 PARIS (FR)

**Description**

Le domaine de la présente invention concerne le domaine de la récupération assistée d'hydrocarbures dans des roches réservoirs, selon des techniques de balayage du milieu par des solutions aqueuses comportant des produits chimiques.

La récupération de l'huile des champs pétroliers requiert souvent l'injection d'un fluide déplaçant, le plus souvent de l'eau, pour maintenir la pression du gisement afin de permettre la production par déplacement de l'huile en place de puits injecteurs vers des puits producteurs disposés suivant un schéma préalablement optimisé pour le champ considéré.

Dans le cas de l'injection d'eau, ce fluide déplaçant peut être injecté seul ou au contraire renfermer des agents chimiques destinés à améliorer le balayage de l'huile en place.

Parmi ces agents chimiques, d'une part, les agents tensio-actifs visent à réduire le piégeage de l'huile dans les pores de la roche par réduction de la tension interfaciale eau-huile et modification éventuelle de la mouillabilité de la roche, d'autre part, les polymères confèrent à l'eau une plus grande viscosité augmentant son efficacité de balayage de la phase hydrocarbure.

Cependant, ces deux catégories de produits améliorants subissent des pertes dans le réservoir en raison de multiples phénomènes parmi lesquels la rétention ou adsorption des produits sur la roche, qui peut être élevée et évidemment préjudiciable à l'intérêt économique de ces procédés de récupération. La présence de cations divalents en place dans l'eau de gisement et sur les minéraux de la roche (notamment argiles) favorise encore ces pertes.

C'est pourquoi, l'injection d'autres agents, généralement des produits alcalins (tels que carbonate de sodium, soude, ...), est recommandée préalablement aux fluides aqueux de balayage contenant des produits améliorants tels tensio-actifs et polymères. Ces agents

C'est pourquoi, l'injection d'autres agents, généralement des produits alcalins (tels que carbonate de sodium, soude, ...), est recommandée préalablement aux fluides aqueux de balayage contenant des produits améliorants tels tensio-actifs et polymères. Ces agents de conditionnement de la roche, dissous sous diverses formes chimiques dissociées ou non en ions, font intervenir de multiples équilibres chimiques en phase aqueuse :

- des réactions de précipitation de sels (sels de cations divalents en place notamment),
- de multiples interactions avec la roche (échanges d'ions et adsorption avec modification des charges de la surface solide),
- éventuellement aussi des réactions avec certains constituants de l'huile en place (formation de savons avec l'agent tensio-actif). A elle seule, l'injection d'agent de conditionnement peut même déjà améliorer la récupération d'huile par rapport à l'injection d'eau conventionnelle dépourvue de tout agent chimique.

Tous ces phénomènes physico-chimiques doivent être pris en compte pour déterminer les volumes et concentrations des produits à injecter et les modalités d'injection (débits, distribution sur le champ via le schéma d'injection,...), tant pour la phase de conditionnement de la roche-réservoir (injection d'agents alcalins de conditionnement) que pour celle des bouchons d'eau améliorée (par tensio-actifs et/ou polymères) qui suivent, destinés à améliorer la récupération et l'efficacité de déplacement.

Ce dimensionnement des solutions injectées est essentiel car il détermine la faisabilité et rentabilité de ces procédés via :

(a) la taille et le coût des installations : installations de surface pour préparer les solutions, (tensio-actifs, polymères); nombre, disposition et équipements de pompage des puits ;
(b) les masses de produits de conditionnement et améliorants requises (volumes et concentrations), donc leur coût ;
(c) et bien sûr, l'efficacité en termes de récupération d'huile.

Dimensionner ces injections de produits de conditionnement et améliorants passe par des calculs sur un modèle du réservoir discrétisé sous formes d'unités de volume élémentaires (mailles), et dans lequel les flux des phases en présence (eau et phases hydrocarbures : huile et/ou gaz), le transport et le devenir des espèces chimiques (passage ou maintien en solution, précipitation, adsorption, transformation en d'autres espèces chimiques) doivent être calculés afin de déterminer les quantités de produit perdues au sein du réservoir et la récupération d'huile aux puits producteurs. Ce dimensionnement passe par des études de sensibilité aux multiples paramètres opératoires (concentrations, taille des bouchons, débits, placement des puits, ...) donc requièrent un simulateur fiable, performant (rapide) et efficace (en termes d'exploitabilité des résultats).

La fiabilité suppose la prise en compte des divers mécanismes physico-chimiques impliqués. La performance sous-entend des temps de simulation courts afin de pouvoir simuler de multiples scénarios destinés à comprendre et sélectionner un dimensionnement garantissant la faisabilité et maximisant la rentabilité de l'opération.

Enfin, l'efficacité du simulateur sous-entend ici un outil de prévision requérant des informations connues et en nombre aussi réduit que possible de la part de l'utilisateur, et dont l'interprétation et l'optimisation des résultats soient aisées et rapides via des études de sensibilité à un petit nombre de paramètres d'entrée.

Compte tenu du mode d'action complexe des produits évoqués plus haut, les modèles de prévision sont complexes car ils font habituellement intervenir les multiples espèces chimiques impliquées dans les réactions d'équilibre au sein de la phase aqueuse telles : équilibre eau-huile, réactions de précipitation, d'adsorption sur la roche, ou autres.

La prise en compte de toutes les espèces chimiques et de tous les phénomènes impliqués dans le transport des produits améliorants et de conditionnement à l'échelle du réservoir accroît considérablement la taille des systèmes numériques à résoudre et donc les temps de calcul.

Ainsi, la présente invention concerne une méthode de récupération assistée d'hydrocarbures dans une roche de réservoir souterrain comprenant l'injection d'une solution aqueuse de conditionnement comportant un agent alcalin, dans laquelle on effectue les étapes suivantes :

- on détermine les effets in situ de ladite injection au moyen d'une simulation d'écoulements sur un modèle du réservoir discrétisé en mailles, ladite simulation prenant en compte le transport de maille en maille de l'agent alcalin en tant qu'agent principal, sans prendre en compte le transport de maille en maille des espèces dites intermédiaires qui résultent de l'injection de l'agent principal en solution aqueuse, les concentrations desdites espèces intermédiaires étant déterminées analytiquement dans chacune des mailles,
- on déduit de ladite simulation les conditions d'injection et les caractéristiques physico-chimiques de ladite solution aqueuse de conditionnement.

On peut déduire de la simulation de l'injection de la solution alcaline, l'évolution du pH dans chacune des mailles.

On peut déduire la perte d'agent alcalin dans la roche réservoir.

L'agent alcalin peut être du $Na_2CO_3$.

L'étendue de l'invention décrite ci-dessus et dans les pages suivantes est limitée par les caractéristiques de la revendication 1 telle que délivrée.

L'objet de l'invention vise donc à remédier au lourd inconvénient de la complexité des modèles numériques de dimensionnement des injections, en maintenant la fiabilité et en améliorant la facilité de mise en œuvre par un paramétrage réduit (c'est-à-dire un minimum d'informations devant être connues de l'utilisateur) et une interprétation plus aisée des résultats obtenus plus rapidement. Pour illustrer la présente invention, on considère dans ce qui suit le cas de l'injection de carbonate de sodium ($Na_2CO_3$) qui est l'agent alcalin conventionnel des injections de solutions alcalines. Pour simplifier l'illustration des avantages de la présente invention, on considère la simulation de l'injection dans un réservoir d'une solution de cet agent alcalin $Na_2CO_3$ en l'absence de tout autre sel.

La mise en œuvre de la présente invention comporte les étapes qui consistent, à chaque pas de temps de la simulation d'un tel déplacement :

1. à modéliser le transport de maille à maille du (ou des) seul(s) additif(s) chimique(s) de l'eau d'injection. Dans le cas présent du carbonate $Na_2CO_3$, qualifié d'espèce "principale". Sans prendre en compte le transport des espèces chimiques (dites "intermédiaires") résultant des multiples équilibres obtenus par la mise en solution aqueuse de cet agent "principal", à savoir dans le cas présent, $HCO_3^-$, $CO_3^{2-}$, $H_2CO_3$, $Na^+$, $H^+$ et $OH^-$.

2. à déterminer localement, dans chaque maille de réservoir, et directement par voie analytique les concentrations des multiples espèces en phase aqueuse résultant des équilibres de dissociation, d'adsorption sur la roche, et le cas échéant de précipitation (en présence de cations divalents en place notamment) et/ou de réaction. Cette détermination permet de déduire les effets de l'agent chimique, notamment la modification du pH et de l'état de surface (mouillabilité) de la roche dans le cas d'un agent alcalin. La résolution analytique garantit avantageusement l'obtention rapide des solutions par rapport aux méthodes numériques itératives conventionnelles telles, par exemple, la méthode de Newton.

Les valeurs des concentrations des espèces chimiques en solution issues du transport de l'agent alcalin entre mailles et des divers équilibres locaux dans chaque maille, permettent de mettre à jour :

- les propriétés des phases, notamment pH, tension interfaciale, viscosité,
- et les paramètres du déplacement, par exemple au moyen de courbes de perméabilité relative fonction du nombre capillaire,

informations qui sont requises pour une résolution précise et fiable des flux de transport de maille à maille.

Afin de clairement illustrer les avantages de la présente invention par rapport au savoir-faire existant, on compare ci-après, pour exemple nullement limitatif, l'injection d'une solution aqueuse de $Na_2CO_3$ en agent de conditionnement "principal", et en l'absence de tout autre sel. On compare également l'approche et les méthodes de résolution suivant la présente invention à celles pratiquées dans l'art antérieur. On note que les effets de cet agent (carbonate) résultent de la dissociation des ions carbonates $CO_3^{2-}$ en ions $HCO_3^-$ et ions $OH^-$, ces derniers ayant pour effets de modifier le pH de la solution aqueuse et l'état de surface de la roche en raison de leur adsorption par cette dernière.

L'approche n°1 définit 2 espèces, les ions $Na^+$ et $OH^-$, à l'exclusion de toute autre espèce principale ou secondaire.. Cette approche n'est prédictive de l'évolution du pH des solutions produites par les puits producteurs que dans le cas d'injection de soude, mais pas dans le cas d'injection de carbonate de sodium.

En effet, on ne peut pas considérer que l'injection d'une concentration de carbonate de sodium en phase aqueuse est équivalente à l'injection des ions OH résultant de la mise en solution de ce carbonate, car les ions carbonates $CO_3^{2-}$ ne sont pas totalement dissociés en ions $OH^-$ et $HCO_3^-$, mais se dissocient au fur et à mesure de leur progression dans le réservoir en raison du déplacement d'équilibre ($CO_3^{2-} + H_2O \longrightarrow HCO_3^- + OH^-$) causé par l'adsorption des ions $OH^-$ par la roche réservoir. Ce comportement est qualifié d'effet "tampon".

L'approche n°2 est décrite, notamment, dans SPE Reservoir Engineering de Mai 1991 par B. Bazin et J. Labrid : "Ion Exchange and Dissolution / Precipitation Modeling: Application to the Injection of Aqueous Fluids Into a Reservoir Sandstone", pages 233-238. Cette approche prend en compte le déplacement de maille en maille qui implique d'autres espèces chimiques (sels monovalents et divalents autres que ceux issus du carbonate de sodium). Cette approche n°2 est prédictive mais complexe et lourde en ce que la méthode est itérative.

En effet, les deux avantages de la présente invention par rapport à cette approche n°2 apparaissent à la lecture des lignes A et B du tableau ci-après.

|  | Approche n° 1 | Approche n° 2 | Présente invention |
|---|---|---|---|
| Données d'entrée relatives à la solution injectée | Concentrations en $Na^+$ et $OH^-$ | Concentrations en $Na^+$ et $CO_3^{2-}$ | Concentration en $Na_2CO_3$ égale en moles à celle de carbonate $CO_3^{2-}$ qui constitue l'espèce active |
| **A**. Espèces <u>principales</u> transportées en phase aqueuse | $Na^+$, $OH^-$ | $Na^+$, Carbone total C ($C=H_2CO_3+HCO_3^-+CO_3^{2-}$) | $Na_2CO_3$ |
| Équilibres locaux au sein de chaque maille permettant de calculer les concentrations des espèces secondaires, le pH résultant, et les concentrations des espèces principales transportées en phase aqueuse | Équilibre d'adsorption des $OH^-$ : $OH^-_{solution} \longleftrightarrow OH^-_{roche}$ | (1) $H_2O \longleftrightarrow H^+ + OH^-$<br><br>(2) $CO_3^{2-} + H_2O \longleftrightarrow HCO_3^- + OH^-$<br>(3) $HCO_3^- + H_2O \longleftrightarrow H_2CO_3 + OH^-$ (équilibre non considéré dans le cadre de la présente invention)<br>(4) Equilibre d'adsorption des $OH^-$ : $OH^-_{solution} \longleftrightarrow OH^-_{roche}$ | |
| **B**. Mode de résolution (locale) des équilibres en espèces (principales et secondaires) de la solution aqueuse au sein de chaque maille | Résolution analytique du seul <u>équilibre</u> d'adsorption | Résolution par méthode itérative des concentrations en $CO_3^{2-}$, $HCO_3^-$, $H_2CO_3$, $OH^-_{roche}$ et $OH^-_{solution}$ (dont on déduit le pH) | Résolution directe <u>analytique</u> de (1), (2) et (4) ($H_2CO_3$ étant négligeable en milieu basique) donnant accès au pH et à la concentration en espèce principale $Na_2CO_3$ en solution aqueuse |

- la ligne A du tableau indique que le nombre d'espèces principales transportées par simulation est réduit au minimum nécessaire (une seule dans l'exemple considéré) dans le modèle objet de la présente invention, à savoir au(x) seul(s) additif(s) de conditionnement sans prendre en compte les espèces qu'il(s) génère(nt) en solution aqueuse. Ceci a pour conséquence de réduire la taille du modèle numérique de transport à résoudre. Ainsi, dans l'exemple présent, pour chaque maille du modèle de réservoir, les bilans de concentration des espèces chimiques en phase aqueuse ne doivent être écrits que pour une seule espèce principale au lieu de 2.
- la ligne B du tableau indique que la résolution des équilibres au sein de chaque maille, destinée à déterminer notamment les effets de l'additif principal, la réduction du pouvoir adsorbant de la roche par adsorption de l'espèce chimique secondaire $OH^-$, est effectuée au moyen d'une méthode directe analytique dans le cadre de la présente invention, au lieu d'une méthode itérative dans le cadre de l'approche n° 2, ce qui constitue un avantage en termes de robustesse et de garantie d'obtention des solutions. Compte tenu de ces avantages, l'usage de la méthode analytique est adopté, y compris dans tous les cas où son emploi nécessite des approximations dans le traitement des équilibres, dont on aura contrôlé séparément qu'elles n'avaient pas d'incidence notable (suivant les règles de l'art en la matière) sur les prévisions, ce qui est par exemple le cas ici pour l'hypothèse d'absence de l'espèce

chimique $H_2CO_3$, tout à fait licite compte tenu du caractère toujours basique des solutions en présence, qui empêche la dissociation de l'espèce $HCO_3^-$.

Il est à noter que l'usage de la présente invention peut être effectué sans perte significative de précision dans la qualité des résultats obtenus. Ainsi pour l'exemple décrit ci-dessus, deux simulateurs fonctionnant suivant la présente invention et suivant l'approche n°2 de l'art antérieur prédisent des évolutions de pH quasi-identiques, c'est-à-dire dont l'ordre de grandeur des écarts (à savoir de l'ordre de 0,1 unité de pH au maximum) est inférieur aux différences (jugées acceptables par l'homme de l'art) entre les prévisions des modèles et les observations réelles issues d'expériences de laboratoire.

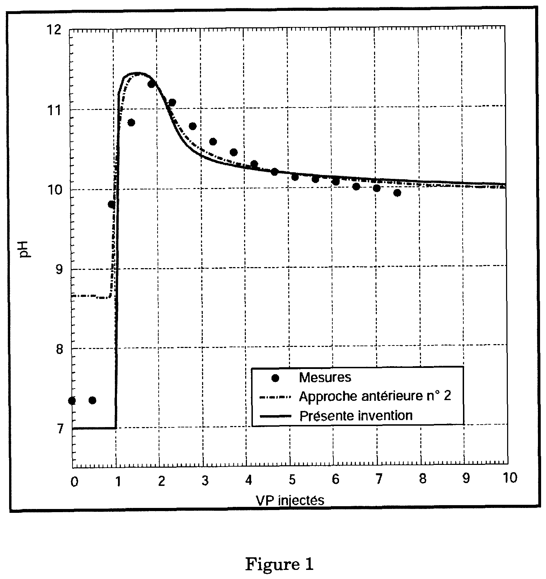

La figure 1 illustre ces résultats. Elle concerne l'évolution du pH en sortie de carotte de laboratoire saturée d'eau (sans carbonate), lors de l'injection d'un volume de pores (VP) d'une solution aqueuse de carbonate de sodium à la concentration de 10 g/l, suivie de l'injection d'un grand volume d'eau de chasse.

Le pH de la solution (effluent) en sortie de carotte a été mesuré à intervalles réguliers répartis sur toute l'injection (environ 8 VP). Les points sur la figure 1 représentent les mesures. Cette expérience a été simulée selon l'approche n°2 d'une part (représentée sur la figure 1 par un trait mixte), et selon la méthode selon la présente invention d'autre part (représentée sur la figure 1 par un trait continu). L'objectif de la simulation est de reproduire l'évolution du pH de l'effluent mesurée après percée de la solution injectée, laquelle percée est obtenue après l'injection d'environ 1 VP. La figure 1 montre que la courbe de réponse en pH simulée au moyen de la méthode selon la présente invention est quasi superposée à la courbe de réponse simulée au moyen de l'approche n°2. De plus, l'écart entre les 2 courbes simulées est bien inférieur à l'écart (jugé acceptable) entre l'une quelconque de ces courbes et les données mesurées.

Un autre exemple est décrit ci-après afin de montrer que l'application de l'invention à des situations plus complexes.

Il s'agit de l'injection d'agent alcalin dans un réservoir dont l'eau en place renferme des cations divalents de calcium et magnésium (par exemple sous forme de chlorures) précipitant en présence de carbonate. Lors d'une injection alcaline, du carbonate de calcium et du carbonate de magnésium précipitent dans les pores de la roche. En ignorant les effets des échanges cationiques entre roche et solution, l'injection de $Na_2CO_3$ met alors en jeu les équilibres suivants :

(1) $H_2O \longleftrightarrow H^+ + OH^-$
(2) $CO_3^{2-} + H_2O \longleftrightarrow HCO_3^- + OH^-$
(3) $HCO_3^- + H_2O \longleftrightarrow H_2CO_3 + OH^-$
(4) Équilibre d'adsorption des $OH^-$: $OH^-_{solution} \longleftrightarrow OH^-_{roche}$
(5) $Ca^{++} + CO_3^{2-} \longleftrightarrow CaCO_3(s)$
(6) $Mg^{++} + CO_3^{2-} \longleftrightarrow MgCO_3(s)$

où $CaCO_3(s)$ et $MgCO_3(s)$ représentent les carbonates de calcium et de magnésium précipités (solides).

Rappelons à nouveau que l'équilibre (3) est quasi entièrement déplacé vers la gauche en milieu basique, ce qui est le cas lors d'une injection alcaline de carbonate de sodium (ou de soude). Il subsiste alors 5 équilibres mettant en jeu les neuf (9) espèces $H^+$, $OH^-_{solution}$ ($OH^-$ en solution), $OH^-_{roche}$ ($OH^-$ adsorbé), $CO_3^{2-}$, $HCO_3^-$, $Ca^{++}$, $CaCO_3(s)$, $Mg^{++}$ et $MgCO_3(s)$ reliées entre elles par les sept (7) relations suivantes :

- les équations des 4 équilibres précédents en solution aqueuse :

$$k1 = [H^+][OH^-]$$

$$k2 = \frac{[HCO_3^-][OH^-]}{[CO_3^{2-}]}$$

$$ks3 = [Ca^{2+}][CO_3^{2-}]$$

$$ks4 = [Mg^{2+}][CO_3^{2-}]$$

- un équilibre d'adsorption des ions $OH^-$ qui se répartissent entre la solution aqueuse et la surface solide de la roche suivant une isotherme d'adsorption de la forme :

$$q_{ads} = q_{max} \frac{b.[OH^-]}{1+b.[OH^-]},$$

où $q_{ads}$ et $q_{max}$ représentent les fractions massiques adsorbées et adsorbables sur la roche, $[OH^-]$ la concentration d'OH⁻ en solution aqueuse, b une constante caractéristique.
- une équation d'électro-neutralité de la solution aqueuse
- et enfin une équation de conservation des espèces : la totalité du carbone en solution provenant du carbonate de la solution injectée.

Le problème en première approche comporte donc deux degrés de liberté (9 moins 7).
Deux stratégies sont possible pour résoudre ce problème :

1. Suivant l'art antérieur, on transporte au moins 2 espèces et détermine localement dans chacune des mailles, au moyen d'une méthode itérative, les concentrations des autres espèces et notamment celles des ions OH⁻ en solution et adsorbés par le solide.
2. Selon la présente invention, on ne transporte qu'une seule espèce principale, l'agent chimique (le carbonate) mis en solution. Localement, dans chaque maille, on détermine par résolution directe analytique des équations précédentes les concentrations d'ions OH⁻ en solution et adsorbés par le solide. Un tel calcul est possible car les précipitations des ions divalents en place ne font que soustraire l'agent injecté (le carbonate) au fur et à mesure de son arrivée dans les mailles.

## Revendications

1. Méthode de récupération assistée d'hydrocarbures dans une roche de réservoir souterrain comprenant l'injection d'une solution aqueuse de conditionnement comportant un agent alcalin, dans laquelle on effectue les étapes suivantes :

   - on détermine les effets in situ de ladite injection de ladite solution aqueuse de conditionnement comportant ledit agent alcalin dans une roche de réservoir souterrain au moyen d'une simulation d'écoulements sur un modèle du réservoir discrétisé en mailles, lesdits effets in situ comprenant la valeur de pH, la tension interfaciale, la viscosité et des paramètres de déplacement,

     • ladite simulation prenant en compte le transport de maille en maille de l'agent alcalin en tant qu'agent principal, sans prendre en compte le transport de maille en maille des espèces dites intermédiaires qui résultent de l'injection de l'agent principal en solution aqueuse, et
     • on détermine analytiquement dans chacune des mailles les concentrations desdites espèces intermédiaires à partir des équilibres de dissociation, d'adsorption sur roche, et le cas échéant de précipitation et/ou de réaction ,

   - on déduit de ladite simulation et desdites concentrations déterminées analytiquement les conditions d'injection et les caractéristiques physico-chimiques de ladite solution aqueuse de conditionnement, lesdites conditions d'injection comprenant les volumes et concentrations des produits à injecter et les modalités d'injection, telles que le débit et le schéma d'injection,
   - on injecte dans ladite roche de réservoir souterrain ladite solution aqueuse de conditionnement comportant ledit agent alcalin selon lesdites conditions d'injection et lesdites caractéristiques physico-chimiques déduites, afin de réaliser la récupération assistée d'hydrocarbures.

2. Méthode selon la revendication 1, dans laquelle on déduit de la simulation de l'injection de la solution alcaline, l'évolution du pH dans chacune des mailles.

3. Méthode selon la revendication 2, dans laquelle on déduit la perte d'agent alcalin dans la roche réservoir.

4. Méthode selon l'une des revendications précédentes, dans laquelle l'agent alcalin est du $Na_2CO_3$.

# EP 2 652 068 B1

**Patentansprüche**

1. Verfahren zur unterstützten Gewinnung von Kohlenwasserstoffen in einer unterirdischen Gesteinslagerstätte, umfassend die Injektion einer wässrigen Konditionierungslösung, umfassend ein alkalisches Mittel, wobei die folgenden Schritte durchgeführt werden:

   - die Effekte in situ der Injektion der wässrigen Konditionierungslösung, umfassend das alkalische Mittel, in einer unterirdischen Gesteinslagerstätte werden mit Hilfe einer Strömungssimulation an einem diskretisierten Maschenmodell der Lagerstätte bestimmt, wobei die Effekte in situ den pH-Wert, die Grenzflächenspannung, die Viskosität und Verdrängungsparameter umfassen,

     • wobei die Simulation den Transport des alkalischen Mittels von Masche zu Masche als Hauptmittel berücksichtigt, ohne den Transport von als intermediären bezeichneten Stoffen von Masche zu Masche zu berücksichtigen, die durch die Injektion des Hauptmittels in wässriger Lösung entstehen, und
     • wobei analytisch in jeder der Maschen die Konzentrationen der dazwischenliegenden Arten aus Gleichgewichten der Dissoziation, der Absorption im Gestein und gegebenenfalls der Fällung und/oder der Reaktion bestimmt werden,

   - aus der Simulation und den analytisch bestimmten Konzentrationen werden die Injektionsbedingungen und die physikochemischen Charakteristiken der wässrigen Konditionierungslösung abgeleitet, wobei die Injektionsbedingungen die Volumen und Konzentrationen der zu injizierenden Produkte und die Injektionsmodalitäten, wie den Durchsatz und das Injektionsschema, umfassen,
   - in das Gestein der unterirdischen Lagerstätte wird die wässrige Konditionierungslösung, umfassend das alkalische Mittel, gemäß den Injektionsbedingungen und den physikochemischen Charakteristiken, die abgeleitet wurden, injiziert, um die unterstützte Gewinnung von Kohlenwasserstoffen durchzuführen.

2. Verfahren nach Anspruch 1, wobei aus der Simulation der Injektion der alkalischen Lösung die Entwicklung des pH in jeder der Maschen abgeleitet wird.

3. Verfahren nach Anspruch 2, wobei der Verlust an alkalischem Mittel in der Gesteinslagerstätte abgeleitet wird.

4. Verfahren nach einem der vorhergehenden Ansprüche, wobei das alkalische Mittel $Na_2CO_3$ ist.


**Claims**

1. Method for enhanced hydrocarbon recovery in an underground reservoir rock, comprising the injection of an aqueous conditioning solution comprising an alkaline agent, in which the following steps are carried out:

   - the in situ effects of said injection of said aqueous conditioning solution comprising said alkaline agent into an underground reservoir rock are determined by means of a simulation of flows on a model of the reservoir discretized into mesh cells, said in situ effects comprising the pH value, the interfacial tension, the viscosity and displacement parameters,

     • said simulation taking into account the mesh-cell to mesh-cell transport of the alkaline agent as principal agent, without taking into account the mesh-cell to mesh-cell transport of the "intermediate" species which result from the injection of the principal agent in aqueous solution, and
     • the concentrations of said intermediate species are determined analytically in each of the mesh cells, from the dissociation, adsorption on rock and, where appropriate, precipitation and/or reaction equilibria,

   - the injection conditions and the physicochemical characteristics of said aqueous conditioning solution are deduced from said simulation and from said concentrations determined analytically, said injection conditions comprising the volumes and concentrations of the products to be injected and the injection modes, such as the flow rate and the injection scheme,
   - said aqueous conditioning solution comprising said alkaline agent is injected into said underground reservoir rock according to said injection conditions and said physicochemical characteristics deduced, in order to perform the enhanced hydrocarbon recovery.

**2.** Method according to Claim 1, in which is deduced, from the simulation of the alkaline solution injection, the change in the pH of each of the mesh cells.

**3.** Method according to Claim 2, in which is deduced the loss of alkaline agent in the reservoir rock.

**4.** Method according to one of the preceding claims, in which the alkaline agent is $Na_2CO_3$.

Figure 1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B. BAZIN ; J. LABRID.** *Ion Exchange and Dissolution / Precipitation Modeling: Application to the Injection of Aqueous Fluids Into a Reservoir Sandstone,* 233-238